# EUROPÄISCHE PATENTSCHRIFT

(11) **EP 1 061 371 B1**
(45) Veröffentlichungstag und Bekanntmachung des Hinweises auf die Patenterteilung: **02.07.2008**
(21) Anmeldenummer: 00111467.7
(22) Anmeldetag: 27.05.2000
(51) Int. Cl.: G01N 35/00, G01N 21/86, G01N 21/55

(54) **Verfahren und Vorrichtung zur Kontrolle der Flüssigkeitsaufnahme einer Testschicht eines Analyseelementes**
Method and device for controlling the liquid absorption of an analysing element test layer
Méthode et dispositif pour contrôler l'absorption d'un liquide par la couche d'essai d'un élément d'analyse

(30) Priorität: 14.06.1999 DE 19926931
(43) Veröffentlichungstag der Anmeldung: 20.12.2000
(73) Patentinhaber: Roche Diagnostics GmbH, 68305 Mannheim (DE)
(72) Erfinder: Petrich, Wolfgang, Dr., 76669 Bad Schönborn (DE); Völkel,Dirk,Dr., 69121 Heidelberg (DE); Ruppender, Uwe, 68161 Mannheim (DE)
(74) Vertreter: Pfeifer, Hans-Peter

(56) Entgegenhaltungen:
- DE-A- 4 407 749
- US-A- 5 114 350
- US-A- 5 169 787
- US-A- 5 221 958
- US-A- 5 563 042

## Beschreibung

Die Erfindung betrifft ein Verfahren zur Kontrolle der Flüssigkeitsaufnahme einer Testschicht eines Analyseelementes sowie ein entsprechendes Analysesystem bestehend aus Analyseelementen und einem zu deren Auswertung ausgebildeten Auswertegerät.

Zur qualitativen und quantitativen Analyse von Bestandteilen einer flüssigen Probe, insbesondere einer Körperflüssigkeit von Menschen oder Tieren, werden in großem Umfang sogenannte trägergebundene Tests eingesetzt. Dabei werden Analyseelemente verwendet, bei denen Reagenzien in eine oder mehrere Testschichten eingebettet sind. Zur Durchführung einer Reaktion wird das Analyseelement mit der Probe in Kontakt gebracht. Die Reaktion von Probe und Reagenz führt zu einer visuell oder mit Hilfe eines Auswertegerätes (meistens reflexionsphotometrisch) auswertbaren für die Analyse charakteristischen Veränderung des Analyseelementes.

Das Auswertegerät ist in der Regel zur Auswertung eines ganz bestimmten Typs von Analyseelementen eines bestimmten Herstellers geeignet. Die Analyseelemente und das Auswertegerät bilden dabei wechselseitig aufeinander abgestimmte Bestandteile und werden üblicherweise insgesamt als Analysesystem bezeichnet.

Es sind zahlreiche unterschiedliche Analyseelement-Typen bekannt, die sich durch das Meßprinzip (z.B. optisch oder elektrochemisch) und die verwendeten Reagenzien sowie durch ihren Aufbau, insbesondere durch die Anordnung und Befestigung der Testschichten, unterscheiden. Gebräuchlich sind insbesondere streifenförmige Analyseelemente (Teststreifen), die aus einem länglichen Kunststoffstreifen ("Basisstreifen") und mindestens einer daran befestigten Testschicht bestehen. Bei einem anderen gebräuchlichen Analyseelementtyp wird ein Kunststoffrahmen ähnlich einem photographischen Diapositiv verwendet, in dem mindestens eine Testschicht eingerahmt ist.

Die Testschichten bestehen aus einem saugfähigen Material, wie beispielsweise Papier oder porösem Kunststoff. Wenn sie zur Durchführung einer Analyse mit der Probenflüssigkeit in Kontakt gebracht werden, saugen sie Flüssigkeit in sich auf. Für eine korrekte Analyse ist es wichtig, daß diese Flüssigkeitsaufnahme gleichmäßig und vollständig erfolgt. Bei jedem Test soll die gleiche, dem Saugvermögen der Testschicht entsprechende Flüssigkeitsmenge aufgesaugt und gleichmäßig in der Testschicht verteilt werden.

Eine visuelle Kontrolle der Flüssigkeitsaufnahme durch den Benutzer ist wenig zuverlässig. Dies gilt insbesondere für Analyseelemente zur Kontrolle des Blutzuckerspiegels, die von Diabetikern benutzt werden, deren Sehvermögen häufig durch die Krankheit beeinträchtigt ist. Es sind deshalb bereits zahlreiche Vorschläge gemacht worden, die Flüssigkeitsaufnahme von Testschichten apparativ mittels eines durch das Auswertegerät durchgeführten Meßverfahrens zu kontrollieren.

Beispielsweise ist in der EP-0087466 ein Analysesystem beschrieben, bei dem aufgrund der optischen Absorption von Wasser im Infrarotbereich eine Abschätzung der von einer Testschicht aufgesaugten Probenmenge vorgenommen wird. Um ein für die Flüssigkeitsaufnahme charakteristisches Lichtsignal zu erzeugen, wird dabei die Testschicht mit Primärlicht (Infrarotlicht mit einer Wellenlänge von etwa 2 µm) beleuchtet und das dabei von der Testschicht diffus reflektierte Sekundärlicht mittels eines Lichtempfängers detektiert. Die Intensität des reflektierten Lichts wird sowohl im trockenen Zustand des Analyseelementes als auch nach der Kontaktierung mit der Probe bestimmt. Um eine Information über die in die Testschicht aufgesaugte Flüssigkeitsmenge zu gewinnen, wird die Differenz dieser beiden Lichtsignale mit einem Referenzsignal verglichen.

Weitere vorbekannte Verfahren zur Kontrolle der vollständigen Flüssigkeitsaufnahme einer Testschicht mittels des entsprechenden Auswertegerätes sind in der EP 0473241 A2, dem US-Patent 5,114,350 und der DE 19628562 A1 beschrieben. Gemeinsam ist diesen vorbekannten Verfahren, daß die Oberfläche der Testschicht mit Primärlicht beleuchtet und dabei die Intensität des von der Testschicht diffus reflektierten Lichts mittels eines auf deren Oberfläche gerichteten Detektors während des Aufsaugens der Flüssigkeit in die Schicht beobachtet wird. Die in die Testschicht eindringende Flüssigkeit führt zu einer Verminderung der diffus reflektierten Intensität. Zeitpunkt und Ausmaß der Intensitätsänderung des diffus reflektierten Lichtes werden verwendet, um Informationen über Zeitpunkt und Vollständigkeit der Flüssigkeitsaufnahme in die Testschicht zu gewinnen.

Dieses vorbekannte Meßprinzip hat jedoch erhebliche Nachteile. Insbesondere ist die Größe der Signaländerung bei der Flüssigkeitsaufnahme stark von der optischen Absorption der Flüssigkeit bei der Meßwellenlänge des Primärlichts abhängig. Im Spektralbereich des sichtbaren Lichts ergibt sich deshalb nur bei stark gefärbten Flüssigkeiten, wie beispielsweise Vollblut, eine gut meßbare starke Signaländerung. Wenn hingegen die in die Testschicht aufgesaugte Flüssigkeit im sichtbaren Spektrum nur sehr schwach gefärbt ist (wie beispielsweise Serum oder Urin) ist die Signaländerung sehr gering und deswegen die Kontrolle der Flüssigkeitsaufnahme unzuverlässig. Insbesondere ist sie empfindlich gegen Störeinflüsse, beispielsweise eine geringfügige Änderung der Testschichtposition durch versehentliches Berühren des Analyseelementes in dem Auswertegerät.

Der Erfindung liegt auf dieser Basis die Aufgabe zugrunde, ein Verfahren und eine Vorrichtung zur Kontrolle der Flüssigkeitsaufnahme einer Testschicht zur Verfügung zu stellen, daß sich durch eine verbesserte Zuverlässigkeit auszeichnet.

Die Aufgabe wird durch ein Verfahren gemäß Anspruch 1 und ein Analysesystem gemäß Anspruch 5 gelöst. Bevorzugte Ausgestaltungen sind Gegenstand der Unteransprüche.

Es ist eine Vielzahl unterschiedlicher Typen von Analyseelementen bekannt, bei denen die Erfindung vorteilhaft verwendet werden kann.
- Weit verbreitet sind Analyseelemente, bei denen eine Mehrzahl von Testschichten derartig übereinander angeordnet sind, daß ihre Oberflächen in einen Flüssigkeitsaustausch ermöglichendem Kontakt zueinander stehen. Die Gesamtheit der übereinandergestapelten Testschichten wird als "Testfeld" bezeichnet. Die Probenflüssigkeit wird üblicherweise auf die oberste Schicht des Testfeldes aufgegeben und dringt nach und nach in die darunterliegenden Testschichten ein, bis schließlich die unterste Schicht die Flüssigkeit in sich aufsaugt. Da bei solchen Analyseelementen die Flüssigkeitsausbreitung im wesentlichen quer zur Flächenausdehnung der Testschichten erfolgt, werden sie als "Analyseelemente mit Flüssigkeits-Quertransport" bezeichnet.
- Daneben gibt es "Analyseelemente mit FlüssigkeitsLängstransport", bei denen mehrere Testschichten - üblicherweise auf einem Basisstreifen - unmittelbar nebeneinander angeordnet sind, wobei sie am Rand so in Kontakt zueinander stehen, daß ein Flüssigkeitsübertritt von Testschicht zu Testschicht parallel zu deren Flächenausdehnung möglich ist.
- Schließlich sind Kombinationen dieser beiden Prinzipien bekannt, wie sie beispielsweise in der US-Patentschrift 5,096,836 beschrieben sind.

Die Kontrolle der Flüssigkeitsaufnahme bezieht sich in der Regel auf die in dem Strömungsweg der Flüssigkeit letzte Testschicht des Analyseelementes. Grundsätzlich ist die Erfindung jedoch zur Kontrolle der Flüssigkeitsaufnahme jeder beliebigen saugfähigen Testschicht eines Analyseelementes geeignet, sofern diese Testschicht in unmittelbarem Kontakt mit einem optisch transparenten Folienstück steht. Der Begriff "saugfähig" ist dabei allgemein als Bezeichnung für jede Form der Flüssigkeitsaufnahme zu verstehen und umfaßt nicht nur die durch Kapillarwirkung verursachte Saugfähigkeit poröser Materialien sondern auch die auf einem Quellvorgang basierende Flüssigkeitsaufnahme.

Optisch transparente Kunststoffolien werden bei der Konstruktion von Analyseelementen vor allem als Testschichtträger in Fällen verwendet, bei denen die Testschicht mit dem Folienstück fest verbunden ist. Insbesondere kann das Folienstück, das eine Testschichtträgerfolie für die Testschicht bildet, mit der Testschicht unmittelbar beschichtet sein. Dies ist gebräuchlich bei Testschichten, die keine selbsttragenden Eigenschaften haben.

Hierzu gehören insbesondere sogenannte Testfilme, also Testschichten, die durch Beschichtung eines Substrats mit einem dünnen Film eines filmbildenden Materials hergestellt werden. Bekannt sind insbesondere quellfähige Testfilme auf Basis von Gelatine sowie nichtquellende poröse Testfilme auf Basis eines Dispersionsfilmbildners. Die zur Flimbildung verwendete filmbildende Masse enthält neben den Reagenzien in der Regel feste Bestandteile, wie insbesondere Pigmente und Kieselgur, die der Schicht die gewünschte Opazität und Saugfähigkeit verleihen. Besonders bewährt hat sich die Erfindung bei Testschichten, die einen Dispersionsfilmbildner und ein Pigment enthalten. Derartige Testschichten sind beispielsweise in den US-Patenten 5,169,787 und 5,536,470 beschrieben.

Die in Analyseelementen (insbesondere als Testschichtträgerfolie) verwendeten transparenten Folien, haben eine sehr geringe Dicke von meist weniger als 0,2 mm. Dementsprechend ist die Flächenausdehnung der Umfangsfläche (d.h. der senkrecht zu der Flächenausdehnung der Folie an deren Umfang verlaufenden Schnittfläche) sehr gering. Beispielsweise besteht bei einem quadratischen Folienstück von 6 mm Kantenlänge die Umfangsfläche aus vier Teilabschnitten, die jeweils eine Fläche von nur 1,2 mm² haben. Dagegen haben die Hauptflächen (Oberseite und die Unterseite) jeweils eine Flächenausdehnung von 36 mm². Obwohl der Austrittsquerschnitt für Licht aus der Umfangsfläche sehr gering ist, wurde im Rahmen der Erfindung festgestellt, daß das aus der Umfangsfläche austretende Licht eine so hohe Intensität hat, daß es ohne besondere Probleme gemessen werden kann.

Besonders vorteilhaft ist, daß die prozentuale Änderung der aus der Umfangsfläche austretenden Lichtintensität während der Flüssigkeitsaufnahme wesentlich höher ist als die Intensitätsänderung des diffus reflektierten Lichts, das bei den vorbekannten Verfahren zur Kontrolle der Flüssigkeitsaufnahme detektiert wurde. Dies gilt insbesondere auch in Fällen, bei denen die von der Testschicht aufgesaugte Flüssigkeit eine geringe Färbung aufweist. Selbst mit destilliertem Wasser wird eine relativ starke Signaländerung beim Aufsaugen der Flüssigkeit in die Testschicht beobachtet. Deswegen läßt sich bei dem erfindungsgemäßen Verfahren mit einfachen Mitteln eine erhöhte Zuverlässigkeit der Kontrolle der Flüssigkeitsaufnahme erreichen. Das Verfahren ist sehr robust gegen Störungen, wie beispielsweise Änderungen des Primärlichts und Änderungen der Position des Analyseelementes in dem Auswertegerät, die durch versehentliches Berühren verursacht werden.

Mit dem erfindungsgemäßen Verfahren wird gezielt die Benetzung der Grenzschicht zwischen der Testschicht und dem Folienstück detektiert. Die vollständige Flüssigkeitsaufnahme wird deshalb zuverlässiger als bei den vorbekannten Verfahren bestimmt, bei denen sich das Meßsignal auf den Mittelwert des Testschichtvolumens bezieht.

Die Erfindung wird nachfolgend anhand von in den Figuren schematisch dargestellten Ausführungsbeispielen näher erläutert; es zeigen:
- Fig. 1: eine perspektivische Prinzipdarstellung der für die Erfindung wesentlichen Elemente eines Analysesystems,
- Fig. 2: eine Seitenansicht, teilweise im Schnitt, entsprechend Fig. 1,
- Fig. 3: eine perspektivische Darstellung eines Teils eines Auswertegerätes in dessen Analyseelementhalterung sich ein Analyseelement in der Meßposition befindet,
- Fig. 4: Meßkurven bei der Kontrolle der Flüssigkeitsaufnahme eines Analyseelementes mit Blut als Probenflüssigkeit,
- Fig. 5: Meßkurven bei der Kontrolle der Flüssigkeitsaufnahme eines Analyseelementes mit Wasser als Probenflüssigkeit,
- Fig. 6: eine perspektivische Prinzipdarstellung einer bevorzugten Ausführungsform zur Flüssigkeitskontrolle bei einem Testträger mit Längstransport.

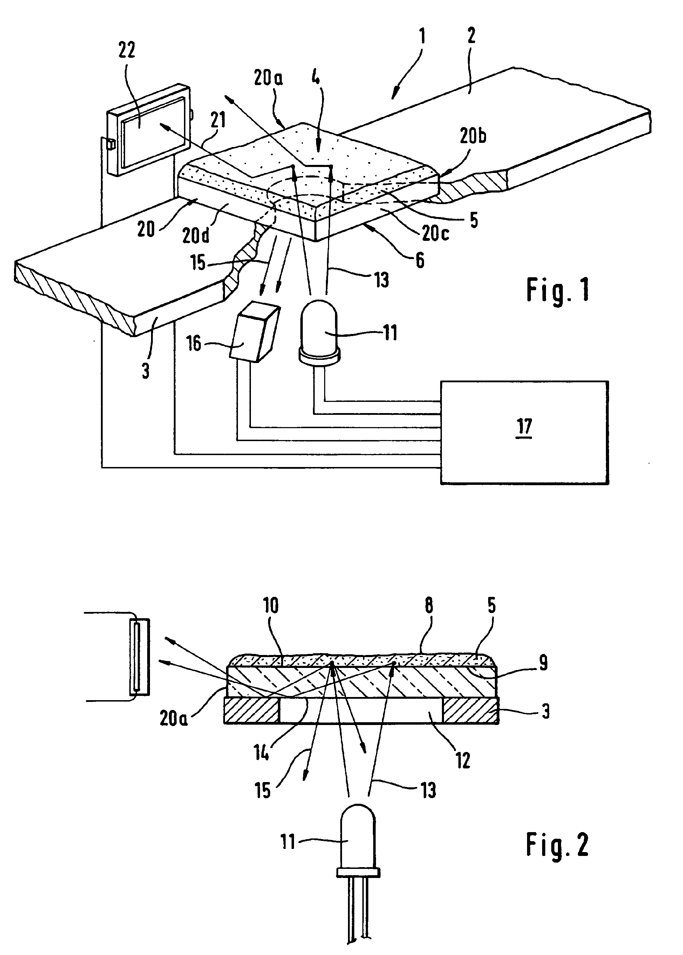

Das in den Figuren 1 und 2 dargestellte Analyseelement 1 ist als Teststreifen 2 ausgebildet. Er besteht aus einem aus steifem Kunststoff hergestelltem Basisstreifen 3 und einem daran befestigten Testfeld 4. Das Testfeld 4 hat im dargestellten Fall nur eine Testschicht 5, die mit einem Folienstück 6 fest verbunden ist.

Zur Durchführung einer Analyse wird ein Tropfen Probenflüssigkeit auf die Oberseite 8 der Testschicht 5 aufgebracht. Die Flüssigkeit dringt unter Auflösung der in der Testschicht 5 enthaltenen Reagenzien ein, bis sie an der Unterseite 9 der Testschicht 5 die Oberseite 10 des Folienstücks 6 kontaktiert.

Die Reaktion des in der Probe enthaltenen Analyten führt zu einer optisch meßbaren Änderung, insbesondere einer Farbänderung, der Teetschicht 5. Um diese zu messen weist das Auswertegerät eine Lichtquelle 11, beispielsweise eine Leuchtdiode, auf deren Primärlicht 13 durch ein unterhalb des Testfeldes 4 vorgesehenes Loch 12 des Basisstreifens 3 auf die Unterseite 14 des Folienstücks 6 gerichtet ist. Das dabei von der Testschicht 5 durch das Folienstück 6 diffus reflektierte durch die Pfeile 15 symbolisierte Sekundärlicht wird von einem Lichtempfänger 16 in Meßsignale umgewandelt, die von einer Auswerteelektronik 17 zu einer Information über die Gegenwart oder Konzentration des Analyten in der Probe weiterverarbeitet werden.

Insoweit ist das dargestellte Analysesystem und das Meßverfahren konventionell. Die Kontrolle der Lichtquelle 11 und die Auswertung der Messung erfolgt in bekannter Weise mit Hilfe der üblicherweise mit einem Mikroprozessor arbeitenden Auswerteelektronik 17.

Um aus der Umfangsfläche 20 des Folienstücks 6 austretendes in den Figuren mit den Pfeilen 21 symbolisiertes Licht zu detektieren ist ein Lichtempfänger 22 vorgesehen, der ebenfalls an die Auswerteelektronik 17 angeschlossen ist. Zur Unterscheidung von dem Meßempfänger 16 wird er nachfolgend als Kontrollempfänger 22 bezeichnet. Für sein Lichtsignal wird nachfolgend die Bezeichnung "Transversalsignal" verwendet, während das Signal des Meßempfängers 16 als "Remissionssignal" bezeichnet wird.

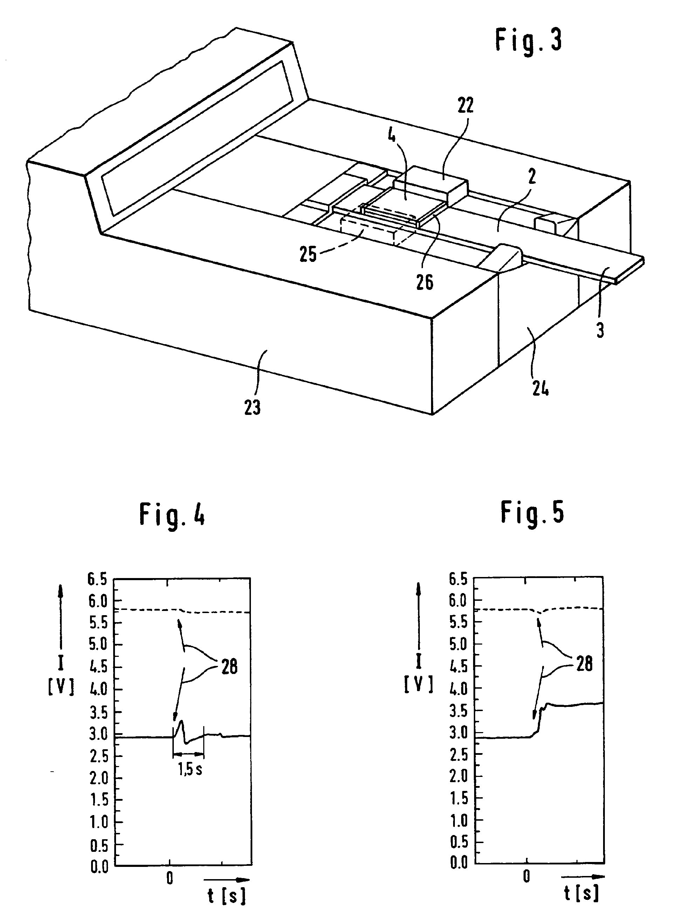

Der Kontrollempfänger 22 muß so ausgebildet und angeordnet sein, daß er selektiv Sekundärlicht detektiert, das aus der Umfangsfläche 20 austritt. Ein Beispiel, wie dies mit einfachen Mitteln erreicht werden, ist in Fig. 3. dargestellt.

Das in Fig. 3 gezeigte Auswertegerät 23 hat eine Teststreifenhalterung 24, durch die der Teststreifen 2 in einer definierten Meßposition gehalten wird. Eine geeignete Teststreifenhalterung ist beispielsweise in dem US Patent 5,424,035 beschrieben. Der Kontrollempfänger 22 ist so positioniert, daß seine lichtempfindliche Fläche dicht bei der Umfangsfläche 20 angeordnet ist. Außerdem sind geeignete Mittel vorgesehen, um Störungen durch andere Lichtquellen, insbesondere durch gestreutes Primärlicht oder durch Umgebungslicht zu minimieren. Dies kann in bekannter Weise mittels Blenden, Lichtsperrwänden und eines die Analyseelementhalterung 24 lichtdicht verschließenden Deckels geschehen. Außerdem kann es zweckmäßig sein, frequenzmoduliertes Primärlicht und ein auf die Modulationsfrequenz abgestimmtes Detektionsverfahren zu verwenden.

Da das in den Figuren dargestellte Testfeld - wie allgemein üblich - eine rechteckige Form hat, besteht die Umfangsfläche 20 aus vier jeweils zwischen den Ecken des Rechtecks verlaufenden Teilflächen 20a bis 20d. Um ein möglichst großes Transversalsignal zu erzeugen, kann es vorteilhaft sein, das in alle Raumrichtungen aus der Umfangsfläche 20 austretende Licht mittels mehrerer Kontrollempfänger zu erfassen, die jeweils so angeordnet sind, daß sie aus einer der Teilfläche 20a bis 20c der Umfangsfläche 20 austretendes Sekundärlicht detektieren. In Fig. 2 ist gestrichelt ein zweiter Kontrollempfänger 25 angedeutet, der analog zu dem Kontrollempfänger 22 gestaltet und auf der gegenüberliegenden Seite des Testfelds 4 positioniert ist, so daß das aus den beiden seitlichen Teilflächen 20a und 20c der Umfangsfläche 20 des Folienstücks 6 austretende Licht detektiert werden kann. Bei dem dargestellten Teststreifentyp sind die beiden verbleibenden (vorderen und hinteren) Teilflächen der Umfangsfläche nicht zugänglich, weil sie von einem Schmelzkleberstreifen 26 verschlossen sind, der zur Befestigung des Testfelds 4 an dem Basisstreifen 3 dient.

Zur Erhöhung der Intensität des aus einer Teilfläche 20a der Umfangsfläche 20 austretenden Lichts kann es vorteilhaft sein, mindestens einen Teil der weiteren Teilflächen 20b bis 20d der Umfangsfläche 20 zu verspiegeln, so daß das von den verspiegelten Teilflächen reflektierte Licht in Richtung auf den Kontrollempfänger 22 aus der Umfangsfläche 20 austritt.

Die nachfolgenden experimentellen Ergebnisse wurden mit der in Fig. 3 dargestellten Anordnung mit nur einem Kontrollempfänger 22 erzielt. Sie zeigen, daß sehr gute Ergebnisse selbst dann erreicht werden, wenn nur das aus einer der vier Teilflächen 20a bis 20d der Umfangsfläche 20 austretende Sekundärlicht zur Kontrolle der Flüssigkeitsaufnahme verwendet wird.

Fig. 4 zeigt den Verlauf des Lichtsignals während des Aufsaugens der Flüssigkeit in die Testschicht 5. Dargestellt ist die Intensität I (Spannung des verstärkten Signals in Volt) in Abhängigkeit von der Zeit t (gemessen in Sekunden). Die obere gestrichelte Linie zeigt das Remissionssignal, d.h. die von dem Meßempfänger 16 detektierte Intensität des diffus reflektierten Sekundärlichts. Die durchgezogene untere Linie zeigt das Transversalsignal, d. h. die Intensität des von dem Kontrollempfänger 22 detektierten aus der Umfangsfläche 20 austretenden Sekundärlichts. Beide Lichtsignale wurden mit identischen Verstärkern verstärkt. Die Pfeile 28 bezeichnen den Zeitpunkt, zu dem die Oberfläche der Testschicht 5 mit der Probenflüssigkeit kontaktiert wurde.

Die Intensität des Remissionssignals ist doppelt so hoch wie die des Transversalsignal. Für die Meßgenauigkeit ist jedoch wesentlich wichtiger, daß die relative Signaländerung des Transversalsignals wesentlich größer als die des Remissionssignals ist. Das Remissionssignal fällt zum Zeitpunkt der Flüssigkeitsaufnahme so wenig (im Mittel über fünf Meßreihen um etwa 1,3 %) daß es nur mit großen Schwierigkeiten zuverlässig ausgewertet werden kann. Demgegenüber steigt das Transversalsignal während des Aufsaugens der Flüssigkeit in die Testschicht wesentlich stärker (im Mittel über fünf Messungen um etwa 5 %) an. Dieser Anstieg kann relativ leicht und zuverlässig ausgewertet werden. Insbesondere kann es zweckmäßig sein, den zeitlichen Verlauf des Lichtsignals mit einem in der Auswerteelektronik 17 enthaltenen Differenzierer zu differenzieren und dadurch die Signaländerung zuverlässig zu erkennen. Es kann auch vorteilhaft sein, das von dem Kontrollempfänger 22 empfangene Transversalsignal in Beziehung zu dem Remissionssignal des Meßempfängers 16 zu setzen und den Quotienten oder die Differenz beider Signale der weiteren Auswertung bei der Kontrolle der Flüssigkeitsaufnahme zugrundezulegen.

Nach dem gegenwärtigen Kenntnisstand der Erfinder dürfte der der Erfindung zugrundeliegende Effekt darauf zurückzuführen sein, daß durch die Benetzung der Testschicht 5 und damit der ihr zugewandten Oberseite 10 des Folienstücks 6 die Bedingungen für die Auskopplung von Licht aus dem Folienstück verändert werden. Ein Teil des in das Folienstück eindringenden Primärlichts 13 wird (abhängig von dem Einfallswinkel) an den Grenzflächen des Folienstücks 6 totalreflektiert. Das Folienstück wirkt somit im gewissen Umfang als Lichtleiter. Das total-reflektierte Licht tritt an der Umfangsfläche 20 aus und kann wie beschrieben detektiert werden.

Die in Fig. 5 dargestellten experimentellen Ergebnisse entsprechen in jeder Hinsicht Fig. 4 mit der Ausnahme, daß die Testschicht 5 nicht mit Blut sondern mit destilliertem Wasser kontaktiert wurde. Während das gestrichelt dargestellt Remissionssignal nur einen kleinen kaum wahrnehmbaren Einbruch zum Zeitpunkt der Kontaktierung mit der Probenflüssigkeit zeigt, ist für das Transversalsignal auch in diesem Fall eine deutliche, gut meßbare Signaländerung festzustellen. Dies zeigt, daß sich die Erfindung in besonderem Maße auch in Fällen eignet, bei denen die Probenflüssigkeit nicht oder nur sehr schwach gefärbt ist.

Bei der in den Figuren 1 bis 3 dargestellten Anordnung ist die Testschicht 4 auf der von der Lichtquelle 11 abgewandten Seite des Folienstückes 6 positioniert, die Testschicht wird somit durch das Folienstück hindurch beleuchtet. Dabei ist es unproblematisch, wenn über der in Kontakt zu dem Folienstück 6 stehenden Testschicht 5 eine oder mehrere weitere Schichten vorgesehen sind. Beispielsweise kann das Testfeld 4 drei Schichten aufweisen, von denen die erste zur Abtrennung der roten Blutkörperchen dient, die zweite eine Reagenz enthält, das eine Vorreaktion bewirkt und die dritte mit dem Folienstück 6 in Kontakt stehende Schicht eine Farbreaktionsschicht ist, die die für die Farbreaktion erforderlichen Reagenzien enthält. Dieses Beispiel zeigt, daß die Flüssigkeit, deren Aufnahme in die dem Folienstück benachbarte Schicht kontrolliert werden soll, nicht notwendigerweise die ursprüngliche Probenflüssigkeit ist. Vielmehr kann es sich um eine durch Vorbereitungsschritte bereits veränderte Probenflüssigkeit (speziell um durch Abtrennung der roten Blutkörperchen aus Blut gewonnenes Plasma) handeln.

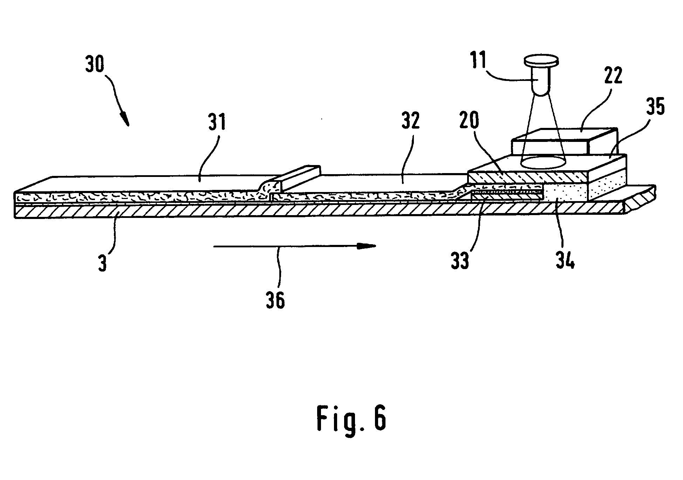

Fig. 6 verdeutlicht weitere vorteilhafte Variationsmöglichkeiten. Dargestellt ist ein Analyseelement 30 mit Flüssigkeits-Längstransport, bei dem auf einem Basisstreifen 3 mehrere Testschichten 31 bis 33 zumindest teilweise nebeneinander angeordnet sind, so daß eine auf die erste Testschicht 31 auf gegebene Probenflüssigkeit ähnlich wie bei einem Chromatographievorgang längs der Testschichten (in der Figur von links nach rechts) in eine Auswertezone transportiert wird, in der eine für die Analyse erforderliche Nachweisreaktion stattfindet. Nähere Einzelheiten eines solchen Analyseelementtyps sind beispielsweise in dem US 5,110,550 beschrieben.

Die Kontrolle der Flüssigkeitsaufnahme bezieht sich auch in diesem Fall auf die in Strömungsrichtung letzte Testschicht. Der Strömungsweg der Flüssigkeit endet an dem in der Figur rechten Ende der Testschicht 32. Die Bezugsziffer 34 bezeichnet einen Schmelzkleberstreifen, mittels dessen ein transparentes Folienstück 35 befestigt ist, das Verhältnismäßig steif ist, so daß der rechte Teil der Testschicht 32 und die darunter befindliche Testschicht 33 durch das Folienstück 35 nach unten gehalten werden. Das Folienstück 35 wird deshalb auch als Niederhalterschicht bezeichnet. Dies ist ein Beispiel dafür, daß sich die Erfindung auch in Fällen eignet, bei denen der erforderliche Kontakt zwischen der Testschicht 33 und dem Folienstück 35 nicht durch Beschichten oder eine andere unmittelbare Verbindung, sondern auf andere Weise, beispielsweise durch einen am Rand vorgesehenen Klebestreifen, hergestellt wird.

Bei einem Analyseelement, bei dem die Flüssigkeit in einer, in Fig. 6 durch den Pfeil 36 symbolisierten, definierten Richtung parallel zu der Flächenausdehnung einer Testschicht transportiert wird, ist es vorteilhaft, wenn - wie dargestellt - die Lichtquelle auf einen Bereich der Testschicht an deren in der Saugrichtung 36 hinterem Ende gerichtet ist. Die Detektion des dabei aus der Umfangsfläche 22 austretenden Lichts erfolgt analog wie bei der in Fig. 3 dargestellten Konstruktion mittels eines Kontrollichtempfängers 22.

## Patentansprüche

1. Verfahren zur Kontrolle der Flüssigkeitsaufnahme einer Testschicht eines Analyseelements, wobei die Testschicht saugfähig ist und bei der Durchführung einer Analyse eine Flüssigkeit aufsaugt, die Testschicht zur Erzeugung eines für die Flüssigkeitsaufnahme charakteristischen Lichtsignals mit Primärlicht beleuchtet und von dem Analyseelement ausgehendes Sekundärlicht detektiert wird, und die Testschicht in Flächenkontakt zu einem optisch transparenten Folienstück steht,
**dadurch gekennzeichnet, daß**
aus der senkrecht zu der Flächenausdehnung des Folienstücks an dessen Umfang verlaufenden schnittfläche austretendes Sekundärlicht detektiert wird.

2. Verfahren nach Anspruch 1, **dadurch gekennzeichnet, daß** die Testschicht durch das Folienstück hindurch beleuchtet wird.

3. Verfahren nach einem der vorhergehenden Ansprüche, **dadurch gekennzeichnet, daß** die Flüssigkeit in einer definierten Richtung parallel zu der Flächenausdehnung der Testschicht in diese aufgesaugt wird und ein Bereich der Testschicht an deren in der Saugrichtung hinterem Ende mit Primärlicht beleuchtet wird.

4. Verfahren nach einem der vorhergehenden Ansprüche, **dadurch gekennzeichnet, daß** auch von der Testschicht diffus reflektiertes Sekundärlicht detektiert wird, um ein zweites Lichtsignal zu erzeugen, und zur Kontrolle der vollständigen Flüssigkeitsaufnahme das erste Lichtsignal und das zweite Lichtsignal in Beziehung zueinander gesetzt werden.

5. Analysesystem mit
Analyseelementen (1,30), die eine saugfähige Testschicht (5,32) aufweisen, die in Flächenkontakt zu einem optisch transparenten Folienstück (6,35) steht und
einem Auswertegerät mit einer auf die Testschicht (5, 32) ausgerichteten Lichtquelle (11), durch die die Testschicht (5,32) eines in dem Auswertegerät (23) in einer Meßposition befindlichen Analyseelements mit Primärlicht (13) beleuchtet wird und mit einem Lichtempfänger, um dabei von dem Analyseelement (1) ausgehendes Sekundärlicht (15, 27) zu detektieren und ein Lichtsignal zu erzeugen,
wobei die Testschicht (5,32) bei der Durchführung einer Analyse eine Flüssigkeit aufsaugt und das Auswertegerät (23) eine Auswerteelektronik (17) einschließt, um aus dem Verlauf des Lichtsignals während des Aufsaugens der Flüssigkeit eine Information über die Flüssigkeitsaufnahme zu gewinnen,
**dadurch gekennzeichnet, daß**
der Lichtempfänger (22) so ausgebildet und angeordnet ist, daß er aus der senkrecht zu der Flächenausdehnung des Folienstücks (6, 35) an dessen Umfang verlaufenden Schnittfläche (20) austretendes Sekundärlicht detektiert.

6. Analysesystem nach Anspruch 5, **dadurch gekennzeichnet, daß** in der Meßposition des Analyseelements (1) die Testschicht (4) auf der von der Lichtquelle (11) abgewandten Seite des Folienstücks (6,35) positioniert ist, so daß sie durch das Folienstück (6,35) hindurch beleuchtet wird.

7. Analysesystem nach Anspruch 5 oder 6, **dadurch gekennzeichnet, daß** die Flüssigkeit in einer definierten Richtung (36) parallel zu der Flächenausdehnung der Testschicht (32) in diese aufgesaugt wird, und die Lichtquelle auf einen Bereich der Testschicht (32) an deren in der Saugrichtung (36) hinterem Ende gerichtet ist.

8. Verfahren nach einem der Ansprüche 1 bis 4 oder Analysesystem nach einem der Ansprüche 5 bis 7, **dadurch gekennzeichnet, daß** die Testschicht (5) mit dem Folienstück (6) fest verbunden ist, wobei das Folienstück eine Testschichtträgerfolie für die Testschicht bildet.

9. Verfahren oder Analysesystem nach Anspruch 8, **dadurch gekennzeichnet, daß** das Folienstück (6) mit der Testschicht (5) beschichtet ist.

10. Verfahren oder Analysesystem nach Anspruch 9, **dadurch gekennzeichnet, daß** die Testschicht (5) einen Dispersionsfilmbildner und ein Pigment enthält.

## Claims

1. A method for checking the taking up of a liquid by a test layer of an analysis element, wherein
the test layer is absorbent and takes up liquid when an analysis is carried out,
the test layer is illuminated with primary light and secondary light emerging from the analysis element is detected for generating a light signal which is characteristic of the liquid take up and
the test layer is in surface contact with a segment of optically transparent foil,
**characterized in that**
secondary light is detected which emerges of a surface generated by cutting the foil and running vertical to the foil's main surface direction along its circumference.

2. Method according to claim 1, **characterized in that** the test layer is illuminated through the foil segment.

3. Method according to any one of the preceding claims, **characterized in that** the liquid is taken up into the test layer in a defined direction parallel to the main surface direction of the test layer, and an area of the test layer at its downstream end in the direction of take up is illuminated with primary light.

4. Method according to any one of the preceding claims, **characterized in that** secondary light diffusely reflected from the test layer is also detected to generate a second light signal, and the first light signal and the second light signal are set in relation to each other to check complete liquid take up.

5. Analytical system comprising
analysis elements (1, 30) having an absorbent test layer (5, 32) in surface contact with a optically transparent foil segment (6, 35),
an evaluation instrument with a light source (11) directed onto the test layer (5, 32), by which the test layer (5, 32) of an analysis element located in a measuring position in the evaluation instrument (23) is illuminated with primary light (13), and
a light receiver for detecting secondary light (15) emerging from the analysis element (1) and for generating a light signal,
wherein the test layer (5, 32) takes up a liquid when an analysis is carried out, and the evaluation instrument (23) includes an evaluation electronics (17) for generating information about the liquid take up on the basis of a change of the light signal during take up of the liquid,
**characterized in that**
the light receiver (22) is formed and arranged such that secondary light is detected which emerges out of a surface generated by cutting the foil and running vertical to the foil's main surface (6,35) direction along its circumference (20).

6. Analytical system according to claim 5, **characterized in that** in the measuring position of the analysis element (1) the test layer (4) is positioned on the side of the foil segment (6, 35) facing away from the light source (11) so that the test layer is illuminated through the foil segment (6, 35).

7. Analytical system according to any one of claims 5 or 6, **characterized in that** the liquid is taken up into the test layer (32) in a defined direction (36) parallel to the main surface direction of the test layer (32), and the light source is directed onto an area of the test layer (32) at its downstream end in the direction of taking up (36).

8. Method according to any one of claims 1 to 4 or analytical system according to any one of claims 5 to 7, **characterized in that** the test layer (5) is firmly connected to the foil segment (6), whereby the foil segment forms a test layer carrier foil for the test layer.

9. Method or analytical system according to claim 8, **characterized in that** the foil segment (6) is coated with the test layer (5).

10. Method or analytical system according to claim 9, **characterized in that** the test
layer (5) contains a dispersion film former and a pigment.

## Revendications

1. Procédé de contrôle de l'absorption de liquide d'une couche d'essai d'un élément d'analyse, la couche d'essai étant absorbante et absorbant un liquide lors de la réalisation d'une analyse, la couche d'essai' étant éclairée par de la lumière primaire pour la production d'un signal lumineux caractéristique pour l'absorption de liquide et de la lumière secondaire sortant de l'élément d'analyse étant détectée, et
la couche d'essai étant en contact de surface avec une feuille à transparence optique,
**caractérisé en ce que** de la lumière secondaire sortant perpendiculairement à l'étendue de surface de la feuille au niveau du plan de section s'étendant autour du pourtour de celle-ci, est détectée.

2. Procédé selon la revendication 1, **caractérisé en ce que** la couche d'essai est éclairée à travers la feuille.

3. Procédé selon l'une des revendications précédentes, **caractérisé en ce que** le liquide est aspiré dans une direction définie parallèlement à l'étendue de surface de la couche d'essai à l'intérieur de celle-ci, et **en ce qu'**une zone de la couche d'essai au niveau de l'extrémité arrière de celle-ci en direction d'aspiration est éclairée par de la lumière primaire.

4. Procédé selon l'une des revendications précédentes, **caractérisé en ce que** l'on détecte également de la lumière secondaire réfléchie de manière diffuse par la couche d'essai, afin de générer un deuxième signal lumineux, et **en ce que** pour le contrôle de l'absorption complète du liquide, le premier signal lumineux et le deuxième signal lumineux sont mis en rapport l'un avec l'autre.

5. Système d'analyse avec des éléments d'analyse (1, 30) qui présentent une couche d'essai absorbante (5, 32), laquelle est en contact de surface avec une feuille à transparence optique (6, 35) et
avec un dispositif d'analyse avec une source lumineuse (11) orientée vers la couche d'essai (5, 32), grâce à laquelle la couche d'essai (5, 32) d'un élément d'analyse se trouvant dans le dispositif d'analyse (23) dans une position de mesure est éclairé avec de la lumière primaire (13) et avec un récepteur de lumière, afin de détecter de la sorte de la lumière secondaire (15, 27) sortant de l'élément d'analyse (1) et générer un signal lumineux,
la couche d'essai (5,32) absorbant un liquide lors de la réalisation d'une analyse et le dispositif d'analyse (23) incluant un dispositif électronique d'analyse (17), afin d'obtenir une information sur l'absorption du liquide grâce au parcours du signal lumineux pendant l'aspiration du liquide,
**caractérisé en ce que** le récepteur de lumière (22) est réalisé et disposé de manière à détecter de la lumière secondaire sortant perpendiculairement à l'étendue de surface de la feuille (6, 35) au niveau du plan de section (20) s'étendant autour du pourtour de celle-ci.

6. Système d'analyse selon la revendication 5, **caractérisé en ce que** dans la position de mesure de l'élément d'analyse (1), la couche d'essai (4) est positionnée du côté de la feuille (6, 35) opposé à la source lumineuse (11), de sorte qu'elle est éclairée à travers la feuille (6, 35).

7. Système d'analyse selon les revendications 5 ou 6, **caractérisé en ce que** le liquide est aspiré dans une direction définie (36) parallèlement à l'étendue de surface de la couche d'essai (32) à l'intérieur de celle-ci, et **en ce que** la source lumineuse est orientée vers une zone de la couche d'essai (32) au niveau de son extrémité arrière en direction d'aspiration (36).

8. Procédé selon l'une des revendications 1 à 4 ou système d'analyse selon l'une des revendications 5 à 7, **caractérisé en ce que** la couche d'essai (5) est reliée de manière serrée à la feuille (6), la feuille formant une feuille de support de couche d'essai pour la couche d'essai.

9. Procédé ou système d'analyse selon la revendication 8, **caractérisé en ce que** la feuille (6) est revêtue de la couche d'essai (5).

10. Procédé ou système d'analyse selon la revendication 9, **caractérisé en ce que** la couche d'essai (5) contient un agent filmogène dispersif et un pigment.
